Europäisches Patentamt

European Patent Office

Office européen des brevets

(19)

(11) Publication number: **0 189 237**
**A2**

# EUROPEAN PATENT APPLICATION

(12)

(21) Application number: **86200188.0**

(22) Date of filing: **05.10.81**

(51) Int. Cl.⁴: **G 01 D 5/22**

(30) Priority: **06.10.80 US 194574**

(43) Date of publication of application: **30.07.86**
**Bulletin 86/31**

(84) Designated Contracting States: **DE FR GB IT NL SE**

(60) Publication number of the earlier application in accordance with Art. 76 EPC: **0049987**

(71) Applicant: **DEERE & COMPANY, 1 John Deere Road, Moline Illinois 61265 (US)**

(72) Inventor: **Symonds, Dean Homer, 311 Oak Park Circle, Waterloo Iowa 50701 (US)**
Inventor: **Brandon, David Eugene, 221-1/2 Home Park Boulevard, Waterloo Iowa 50701 (US)**

(74) Representative: **Pears, David Ashley et al, REDDIE & GROSE 16 Theobalds Road, London WC1X 8PL (GB)**

(54) **An inductive displacement transducer system.**

(57) The primary winding (60) of a displacement transducer (40) is energised by turning on a transistor (Q2) when a flip-flop (166) has been reset to turn off a transistor (Q3), in response to a pulse (A) from a pulse generator (150). The transistor (Q2) does not turn on until the pulse has terminated and thereby turned off another transistor (Q1). The current builds up until a comparator (164) sets the flip-flop (166) to turn on Q3 and thereby turn off Q2. In order to prevent overdriving a controlled device, the smoothed output (Vo1, Vo2) from each secondary winding (82, 84) is applied to a corresponding comparator (168, 170), either of which, when a predetermined threshold is overstepped, turns on Q1, (to turn off Q2), via a comparator (156) and prevents the flip-flop (166) being reset via a comparator (158).

- 1 -
## AN INDUCTIVE DISPLACEMENT TRANSDUCER SYSTEM

This invention relates to an inductive displacement transducer system, suitable for producing electrical signals indicative of the position of a control lever, of the kind defined in the introductory part of claim 1.

Such a system is known from US 4 083 237 in which feedback control regulates the amplitude of the ac signal applied to the primary winding, in order to compensate for temperature-dependency of the signals derived from the secondary windings of the transducer.

The present invention is concerned with a different problem, namely ensuring that the output signals cannot increase in magnitude as a result of certain electrical failure conditions since, in a hydrostatic drive system for example, this could cause a dangerous increase in the power output of a pump.

The transducer system according to the invention is defined in claim 1 below.

The invention will be described in more detail, by way of example, with reference to the accompanying drawings, in which:

Fig 1 is a schematic diagram of a circuit embodying the invention; and

Fig 2 is a waveform diagram of signals generated at various points in the circuit of Fig 1.

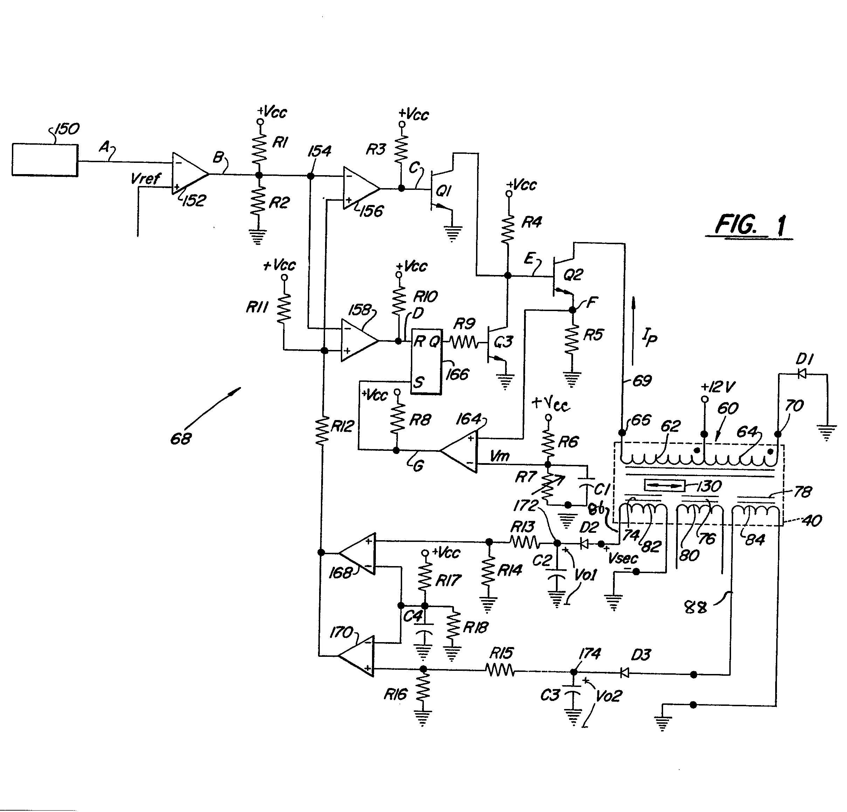

Referring to Fig 1, a rotary transducer 40 has a primary winding 60, secondary windings 82, 84 on cores 74, 78, a dummy secondary winding 80 on a core 76 and a rotary flux-conductive member 130 movable for varying the coupling between the primary and secondary windings. The structure of the transducer is described in application 81304602.6 (EP 0 049 987), out of which the present application is divided. The primary coil 60 includes a centre tap which is coupled to the positive terminal of a negative ground, 12-volt battery and which divides the coil 60 into portions 62 and 64.

A conductor 69 connects terminal 66 of coil 62 with a circuit 68. Terminal 70 of coil 64 is grounded via a diode D1. One end of each of the coils 82 and 84 is grounded, while their other ends are connected to the circuit 68 via conductors 86 and 88, respectively.

0189237

- 2 -

The control circuit 68 includes a repetitive signal generator 150, such as a 10% duty cycle, 5-volt positive square wave generator. The output of generator 150 is coupled to the inverting input (-) of an operational amplifier 152. A constant reference voltage source (Vref) is connected to the non-inverting input (+) of the amplifier 152. The output of the amplifier 152 is connected to D.C. supply voltage (Vcc) via resistor R1 and to ground via resistor R2. Resistors R1 and R2 constitute a voltage divider which limits the voltage at terminal 154 to Vcc x (R2 (R1 + R2)). Terminal 154 is coupled to the inverting inputs (-) of operational amplifiers 156 and 158. The output of the amplifier 156 is coupled to the base of grounded emitter transistor Q1 and to Vcc via resistor R3. The collector of Q1 is connected to Vcc via resistor R4, to the base of driver transistor Q2 and to the collector of a grounded emitter transistor Q3. The collector of transistor Q2 is connected to a terminal 66 of primary coil 62. The emitter of Q2 is coupled to ground via resistor R5 and to the non-inverting (+) terminal of an operational amplifier 164.

Another voltage divider consists of a fixed resistance R6 coupled between Vcc and a grounded variable resistor or potentiometer R7 which is connected in parallel with a filter capacitor C1. This voltage divider provides a variable reference voltage (Vm) which is coupled to the inverting (-) input of op amp 164. The output of the amplifier 164 is coupled to Vcc via resistor R8 and to the set (S) input of set-reset flip-flop 166. The Q ouput of flip-flop 166 is coupled to the base of transistor Q3 via resistor R9. The reset input (R) of flip-flop 166 is coupled to Vcc via resistor R10 and to the output of the amplifier 158. The non-inverting (+) inputs of the amplifiers 156 and 158 are coupled to Vcc via resistor R11 and to the outputs of operational amplifiers 168 and 170 via resistor R12.

Secondary coil 82 is coupled between ground and the anode of diode D2. The cathode of diode D2 is connected to output terminal 172, to ground via capacitor C2 and to the non-inverting (+) input of the amplifier 168 via resistor R13. The (+) input of the amplifier 168 is coupled to ground via resistor R14. Secondary coil 84 is coupled between ground and the anode of diode D3. The cathode of diode D3 is connected to output terminal 174, to ground via capacitor C3 and to the non-inverting (+) input of op amp 170 via resistor R15. The (+) input of the amplifier 170 is coupled to ground via resistor R16. The inverting (-) inputs of both the amplifiers 168 and 170 are coupled together, to Vcc via resistor R17 and to ground via parallel connected resistor R18 and capacitor C4.

Assume that the rotary member 130 is moved to a position in which there is a relatively large amount of magnetic coupling between the primary coil 60 and the secondary core 74 and consequently, very little magnetic coupling between the primary coil 60 and the other outer secondary core 78. This condition is illustrated schematically in Fig 1. Now, assume that power is applied to the circuit of Fig 1.

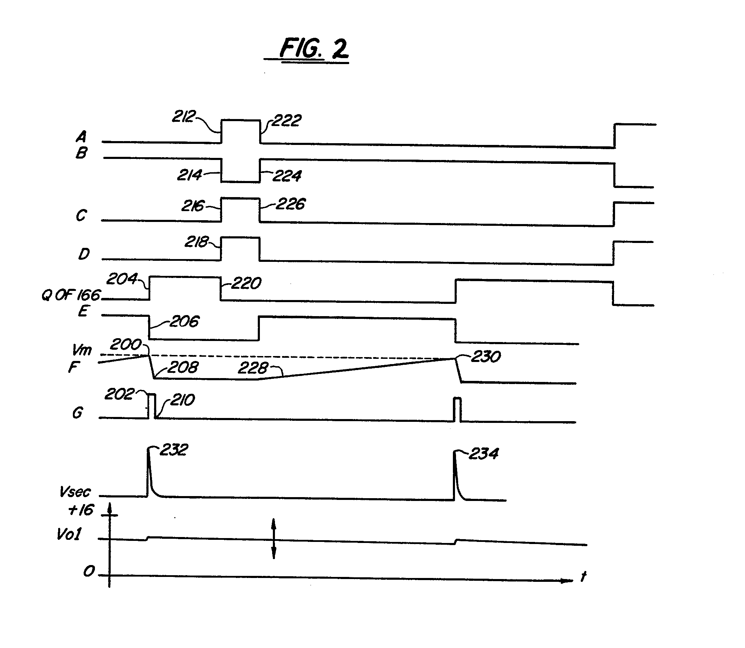

If transistors Q1 and Q3 are initially off, then driver transistor Q2 will be conducting because its base is connected to Vcc via resistor R4. Thus, a steadily increasing current Ip will flow from +12 volts to ground via primary coil 62, conducting transistor Q2 and resistor R5. Eventually, the current Ip attains a value such that the voltage F across resistor R5 equals Vm, (Vm = Vcc x (R7 (R6 + R7)), as at 200 of Fig 2. When this happens, the output of amplifier 164 goes high, as at 202, setting the Q output of flip-flop 166 high, as at 204, and turning on transistor Q3. The turning on of Q3 lowers the voltage E, as at 206, at the base of transistor Q2, thus turning Q2 off, terminating the current Ip and returning voltage F and the output of the amplifier 164 to zero, as at 208 and 210, respectively.

The circuit of Fig 1 remains in this condition until the leading edge 212 of the next pulse from the generator 150 occurs. This causes the output B of amplifier 152 to toggle high-to-low, as at 214. This high-to-low transition of signal B causes the output signal C of amplifier 156 to toggle low-to-high, as at 216, thus turning on transistor Q1. The high-to-low transistor of signal B also causes the output signal D of amplifier 158 to toggle low-to-high, as at 318, and turning transistor Q3 off. Transistor Q2 remains off unless both transistors Q1 and Q3 are off simultaneously.

The high-to-low transition of the pulse of signal A, which occurs at 222, causes a low-to-high transition of signal B, as at 224. This low-to-high transition of signal B toggles the output signal C of amplifier 156 high-to-low, as at 226, thus turning transistor Q1 off. With both transistors Q1 and Q3 off, transistor Q2 turns on and the increasing current Ip begins to flow again, as at 228. As described previously, the current Ip increases until it reaches a value such that Ip x R5 = Vm, as at 230, at which point Q2 is turned off and the current Ip is again abruptly terminated, as previously described. This process repeats itself periodically at a 24kHz rate, due to the 24kHz repetition rate of the output A of generator 150.

Due to the well-known $L\frac{di}{dt}$ effect, the abrupt terminations or transients of the current Ip through the inductance of the primary coil 60 produce high amplitude voltage spikes, as at 232 and 234, in the voltage Vsec which appears across secondary coil 82. These periodic voltage spikes produce a filtered and substantially D.C. output voltage Vo1 across capacitor C2. By moving the coupling rotor 130 to increase or decrease the overlap between the rotor 130 and the secondary cores, and thus, increase or decrease coupling between the primary coil 60 and the secondary coil 82, the voltage Vo1 may be increased or decreased, respectively, between zero and approximately +16 volts D.C. For example, when the coupling rotor 130 is moved to the right, viewing Fig. 1, the amount of flux coupled to the secondary coil 82 is decreased while the amount of flux coupled to the centre secondary coil 80 increases. Voltage Vo2 may be similarly varied by moving the coupling rotors 130 to couple the secondary coil 84 with the primary coil 60. The linearity of the relationship between the amount of flux coupled to the secondary coil 82 and the position of the coupling rotor 130 may be controlled by connecting an impedance across the centre or return secondary coil 80. However, it has been determined that a desirable linear flux coupling characteristic may be achieved by open circuiting centre secondary coil 80, as shown in Fig. 1.

The circuit 68 includes protection against over-voltage conditions of the output voltages Vo1 and Vo2. For example, the voltage Vo1 is sensed by the non-inverting (+) input of amplifier 168 via a voltage divider consisting of R13 and R14. A voltage of +2.5 volts is applied to the (-) input of amplifier 168. Thus, the output of amplifier 168 remains low unless voltage Vol increases to a value such that Vol x (R14  (R13 + R14)) = 2.5 volts, at which point the output of amplifier 168 goes from low-to-high. This high level output of amplifier 168 is applied to the non-inverting (+) input of amplifier 158 which prevents flip-flop 166 from being reset, thus assuring that transistor Q3 cannot be turned off after it is turned on by the setting of flip-flop 166. The high level output of amplifier 168 is also applied to the non-inverting input of amplifier 156, thus forcing the output of amplifier 156 high and turning on transistor Q1. The turning on of either transistor Q1 or Q3 turns off transistor Q2 and prevents generation of further pulses of current Ip, thus preventing further spikes in voltage Vol. This allows capacitor C2 to discharge and decrease voltage Vol, eliminating the over-voltage condition.

Thus, the circuit 68 and the transducer 40 cooperate to provide electrically isolated output voltages Vol and Vo2, each with a magnitude corresponding to the angular position of the rotor relative to the fixed core assembly. These output voltages may be applied via high input impedance voltage-to-current amplifiers (not shown) to drive the solenoid coils of pilot valves of a hydraulic drive system. In this manner, the isolated voltages Vol and Vo2 may be used to independently control the forward and reverse speeds, respectively, of a hydraulic drive system.

Safety-related advantages are realized by the inductive transducer and the associated circuitry when used to control a hydraulic drive system in the manner suggested above. For example, a shorted turn in the seondary coil 82 or 84 results in a reduced corresponding secondary coil voltage Vsec since the ratio of the number of turns in the secondary coil to the number of turns in the primary coil is effectively reduced. Open circuits in secondary coils 82 or 84 also cause a reduced secondary coil voltage Vsec since the current flow in the second coil would be completely prevented. Similarly, open circuit conditions in the primary coils 62 or 64 reduce the amount of flux in primary coil and reduce the secondary voltage Vsec. A short circuit in one of the primary coils will act as a shorted turn which produces a flux which opposes the normally produced flux. This opposing flux reduces the total flux which is coupled to the secondary coils, thus reducing the magnitude of the secondary voltage Vsec and of the output voltage Vo1 or Vo2. If the isolated secondary coils 82 and 84 are connected, as suggested, to independently control the forward and reverse operation of a hydraulic drive system, then an electrical failure in the transducer 40 would only result in a decreased power output of the hydraulic drive system (due to a reduced swash plate angle) and could not cause the hydraulic drive system to reverse its direction of operation.

Failures in the circuit 68 may also result in a reduced output voltage Vo1 or Vo2. For example, if failures occur such that the driving transistor Q2 remains constantly on or constantly off, then there will be no transients in the primary current Ip, with the result that there will be no voltage spikes in the voltage Vsec across the secondary coils 82 or 84. With no periodic voltage spikes across the secondary coils 82 or 84, then capacitors C2 or C3 will discharge through resistors R13 and R14 and reduce the magnitude of the corresponding output voltage Vo1 or Vo2. As previously discussed, this reduced output voltage would again correspond to a reduced pump power output and a reduced drive speed if this pump were used as the pump in a hydrostatic drive system.

In summary, the primary and secondary coils all have parallel axis and first and second pole faces lying in first and second parallel, major faces of the core assembly. The ferro-magnetic rotor 130 forms a magnetic flux conductive member and comprises arms which extend parallel to each other and are mounted against the parallel faces of the core assembly. The arms rotate together about the axis of the primary coil and the ends of the arms move across the pole faces of the secondary coils whose axes are equidistant from the primary coil axis. Because the coils have parallel axes, they are very poorly coupled except when the arms bridge the primary coil to a secondary coil to an extent dependent upon the amount that the arm ends overlap the pole faces of the secondary coil in question. When the ends of the arms are centered on the central secondary core 76, there is no output from either of the secondary coils 82 and 84. As the arms are rotated to the left there is an increasing output from the second coil 82 representing the amount of rotation from the centered position. Correspondingly, rotation to the right produces an increasing output from the secondary coil 84.

0189237

- 8 -
CLAIMS

1. An inductive displacement transducer system, comprising a primary coil (60) a second coil (74), means (130) for variably magnetically coupling the primary and secondary coils as a function of the displacement to be measured, and a circuit (68) for energising the primary coil (60) with alternating current with feedback control of the energising current, characterised in that the energising circuit (68) applies a time varying excitation signal with abrupt transients to the primary coil (60) and includes comparator means (168, 170) for generating a limit signal when the secondary signal exceeds a predetermined limit, and inhibit means (158, 166, Q2, Q3) for preventing generation of the excitation signal in response to the limit signal.

2. A transducer system according to claim 1, characterised in that the energising circuit (68) comprises a transistor (Q2) having a conducting state when a given signal is applied to its base, the conducting transistor drawing an increase current through the primary coil (60), means (150) for generating a clock signal (A), means (158, 166) responsive to the clock signal to initiate application of the given signal to the base of the first transistor, and a current comparator (164) for comparing the increasing primary coil current to a reference current and for removing the given signal from the base of the first transistor when the primary coil current is greater than the reference current.

3. A transducer system according to claim 2, characterised by a clock signal comparator (156) for comparing the clock signal (A) with a reference signal and for generating a signal at an output thereof when a predetermined relationship between the clock and reference signals is satisfied; a bistable device (166) having an output with a first state triggered by the output of the current comparator (164), and switch means (Q1, Q3) coupled to the base of the transistor (Q2), to the output of the clock comparator (156) and to the output of the bistable device (166) for coupling the given signal to the transistor base only when the outputs of the clock comparator and of the bistable device are in selected states.

FIG. 1

## FIG. 2